# EUROPÄISCHE PATENTANMELDUNG

(11) **EP 2 592 027 A1**
(43) Veröffentlichungstag der Anmeldung: **15.05.2013**
(21) Anmeldenummer: 12191410.5
(22) Anmeldetag: 06.11.2012
(51) Int. Cl.: B65G 57/11, B65G 61/00, B65G 47/08

(54) **Vorrichtung zum kontrollierten Ablegen und Anordnen von Objekten**

(30) Priorität: 09.11.2011 CH 17962011
(71) Anmelder: Busch-Werke AG, 7203 Trimmis (CH)
(72) Erfinder: Begert, Urs, 2563 Ipsach (CH)
(74) Vertreter: Hasler, Erich

(57) **Zusammenfassung**

Eine Vorrichtung zum kontrollierten Ablegen und Anordnen von Objekten, wie von Paketen, Kartons, etc. auf einer Transportvorrichtung (41), z.B. einer Palette, besitzt mehrere in Reihe geschalteter Transportbänder (13,15,17,19), welche im Takt betrieben werden, sodass sich jeweils mindestens ein Paket jeweils auf einem Transportband befinden kann. Die abzulegenden Objekte werden zunächst vorzugsweise bezüglich einer z-Achse orientiert und dann an einem Eckabschieber (33) ausgerichtet. Der in der y-Richtung verschiebbare Eckabschieber (33) definiert dabei gleichzeitig die endgültige Position des Objekts in der y-Richtung. Danach wird das Objekt einem in der x-Richtung orientierten Bull Nose Band (17) übergeben, dessen Längserstreckung in x-Richtung veränderbar ist. Vom Bull Nose Band (17) wird das Objekt einem Beladeband (19) übergeben, welches das Objekt hinter einem auf der Palette bereits vorhandenen anderen Objekt oder einer anderen Begrenzung anordnet. Ist eine Lage auf der Palette voll, wird die Hebevorrichtung, auf welcher die Palette abgelegt ist, nach unten verfahren, sodass eine nächste Lage von Objekten angeordnet werden kann.

## Beschreibung

Die vorliegende Erfindung betrifft eine Vorrichtung zum kontrollierten Ablegen und Anordnen von Objekten, insbesondere von Paketen, Kartons oder dergleichen, auf einer Transportvorrichtung, z.B. einer Palette.

Der Versand von Waren erfolgt heute häufig auf Paletten, auf denen jeweils alle für einen bestimmten Adressaten bestimmten Waren zusammengestellt werden. In der Regel sind die Waren in Kartons, "Trays" oder Paketen, jeweils meist von quaderförmiger Gestalt, oder Schrumpfpackungen verpackt. Auch Mehrweg-Gebinde müssen oft zugestellt werden. Die erwähnten Objekte gilt es, möglichst platzsparend auf einer Palette oder einem Rollwagen anzuordnen, um Transportkosten einzusparen. Ein wichtiges Anwendungsgebiet betrifft die Filialen-Kommissionierung von unterschiedlichen Waren.

Heutzutage wird das Beladen von Paletten häufig von Robotern automatisch erledigt. Dabei werden in einem ersten Schritt die Abmessungen der zu transportierenden Pakete von einem Erfassungssystem erfasst und in einem Rechner abgelegt. Sobald die für einen bestimmten Adressaten bestimmten Pakete erfasst sind, berechnet der Rechner, wie die Pakete auf der Palette anzuordnen sind, damit die Palette möglichst dicht beladen werden kann. Diese Daten werden dann der Steuerung eines Roboters übermittelt, welcher die Pakete an den vom Rechner vorgesehenen Positionen ablegt. Die z. Zt. in der Praxis eingesetzten mehrachsigen Gelenkarmroboter besitzen einen Roboterarm (Manipulator), welcher mit einem Greifer (Effektor) ausgestattet ist. Am Greifer befinden sich Sensoren, um die Pakete zu orten, ergreifen und am gewünschten Ort ablegen zu können. Ein Nachteil der Gelenkarmroboter ist jedoch, dass deren Kapazität beschränkt ist, da jeweils nur ein einzelnes Paket manipuliert werden kann.

Aufgabe der vorliegenden Erfindung ist es deshalb, eine Vorrichtung vorzuschlagen, welche eine grosse Kapazität für die Palettierung von Objekten, insbesondere Paketen und dergleichen, aufweist.

Erfindungsgemäss wird die Aufgabe gelöst durch eine Vorrichtung zum gesteuerten Ablegen und Anordnen von Objekten, wie Paketen, auf einer Transportvorrichtung, z.B. einer Palette, mit den Merkmalen von Anspruch 1. Diese Vorrichtung besitzt
- ein Übernahmetransportband für den Transport eines Objekts in einer bestimmten Richtung, beispielsweise in der y-Richtung eines kartesischen Koordinatensystems,
- ein am Ende des Übernahmebands vorgesehener Eckabschieber, welcher in der y-Richtung verschiebbar ist und
   - einen parallel zur x-Richtung sich erstreckenden Anschlag sowie
   - ein Förderorgan für die Verschiebung des Objekts in x-Richtung aufweist,
- ein Bull Nose Band, dessen Transportrichtung sich in x-Richtung erstreckt und dessen Längserstreckung in x-Richtung veränderbar ist,
- wenigstens eine Führungsvorrichtung mit wenigstens einem in y-Richtung sich erstreckendem Führungselement, auf oder an welchem das Bull Nose Band und gegebenenfalls der Eckabschieber verschiebbar angeordnet sind,
- eine in z- Richtung verschiebbaren Hebevorrichtung für die Aufnahme einer Transportvorrichtung (Palette), und
- eine Steuervorrichtung zur Steuerung der einzelnen Bänder, des Eckabschiebers, der Führungsvorrichtung und der Hebevorrichtung.

Die beschriebene erfindungsgemässe Vorrichtung hat gegenüber einem Gelenkarmroboter den Vorteil, dass mehrere Objekte gleichzeitig bearbeitet werden können und dass dementsprechend die Verarbeitungskapazität recht hoch ist. Generell können Taktzeiten von 2 bis 4 Sekunden erreicht werden. Das heisst, alle 2 bis 4 Sekunden wird ein Paket auf der Palette abgelegt. Eine bedeutende Rolle kommt dabei dem Bull Nose Band zu. Das Bull Nose Band hat in der Regel einen statischen Einlauf und einen in der Bandebene rückziehbaren Auslauf. Dies ermöglicht es, Objekte an unterschiedlichen Positionen in der x-Richtung abzulegen. Weil das Bull Nose Band gleichzeitig in der y-Richtung verschiebbar ist, können so Objekte an beliebigen Orten entsprechend der maximalen Längenveränderbarkeit des Bull Nose Bands in der x-Richtung und des maximalen Verschiebewegs in der y-Richtung abgelegt werden. Grundsätzlich können für Herstellung der erfindungsgemässen Palettiervorrichtung weitgehend auf dem Markt erhältliche Komponenten eingesetzt werden, was die Herstellkosten verringert.

Der in der vorliegenden Beschreibung verwendete, allgemeine Begriff Objekt soll für jedwelche Art von zu transportierenden Waren oder Gegenständen, wie Kartons, Trays, Schrumpfpackungen, Mehrweg-Gebinde o.ä. stehen.

Vorteilhaft ist am Ende des Bull Nose Bands eine Beladevorrichtung angeordnet. Diese besitzt am vorderen Ende zweckmässigerweise eine Rolle eines kleinen Durchmessers, sodass ein Objekt sicher auf einer Unterlage abgesetzt werden kann. Die Beladevorrichtung ist vorzugsweise um eine in der y-Richtung verlaufende Drehachse verschwenkbar, welche sich nahe am Bull Nose Band befindet. Durch Verschwenken kann eine Feineinstellung des vorderen Endes der Beladevorrichtung in der Höhe vorgenommen werden. An der Beladevorrichtung können mit der Steuervorrichtung in Verbindung stehende Sensoren vorgesehen sein, um den Abstand des vorderen Endes der Beladevorrichtung zur Ablagefläche (in z-Richtung) und Objekten oder räumlichen Begrenzungen (in x-Richtung) zu bestimmen. Ist keine separate Beladevorrichtung vorgesehen, so können die Sensoren auch am vorderen Ende des Bull Nose Transportbandes vorgesehen sein.

Gemäss einer bevorzugten Ausführungsform ist in Transportrichtung gesehen vor dem Transportband ein weiteres Übernahmetransportband vorgesehen. Die Verwendung eines weiteren Transportbands hat den Vorteil, dass insbesondere dann, wenn das abgelegte Objekt zuerst noch bezüglich der z-Achse orientiert werden muss, sich sehr kurze Taktzeiten zwischen 1 und 5 Sekunden, vorzugsweise 2 bis 3 Sekunden, erreichen lassen.

Vorteilhaft ist eine Orientierungsvorrichtung zum Ausrichten des Objekts auf dem Transportband oder einem gegebenenfalls vorgelagerten Übernahmetransportband bezüglicher einer in z-Richtung verlaufender Drehachse vorgesehen. Eine solche Orientierungsvorrichtung braucht es dann, wenn die Objekte zwar mit einer bestimmten Seite, sonst aber in beliebiger Orientierung auf dem Transportband, welches zum Eckabschieber führt, abgelegt werden.

Vorteilhaft besitzt die Steuervorrichtung eine Schnittstelle, um Daten bezüglich des abzulegenden Objekts von einem Rechner oder einer anderen Steuereinheit entgegenzunehmen. Denkbar ist jedoch, eine einzige Rechner- und Steuereinheit vorzusehen, welche sämtliche notwendige Daten ermittelt und Steuerungen vornimmt. Darunter fällt beispielsweise die Ermittlung der Dimensionen der Objekte, die Berechnung der optimalen Anordnung der Objekte auf der Transportvorrichtung und Steuerung und Kontrolle der Transportoperationen.

Vorteilhaft ist die Führungsvorrichtung in der x-Richtung um das 0.6 bis 1.4-fache, vorzugsweise 0.8 bis 1.2-fache, und besonders bevorzugt das 0.9 bis 1.0-fache der Distanz Y₁Y₂ (entsprechend der einen Seitenlänge der Palette oder Transportvorrichtung) verschiebbar. Dies erlaubt es, die Objekte in der y-Richtung an beliebigen Positionen der Palette abzulegen. Die Positionierung des Objekts in x-Richtung wird dabei durch das Bull Nose Band vorgenommen. Die Grobhöhenverstellung erfolgt vorzugsweise durch die Hebevorrichtung, auf welcher die Transportvorrichtung resp. Palette, angeordnet ist. Die Feineinstellung in der Höhe erfolgt dann durch die mit Sensoren ausgerüstete Ablegevorrichtung. Vorteilhaft ist die Ablegevorrichtung in der Breite veränderbar, d.h. die Breite des Transportbands der Ablegevorrichtung kann eingestellt werden.

Die Orientierung der Objekte auf dem Förderband wird vorzugsweise durch eine Orientierungsvorrichtung mit zwei in Abstand voneinander angeordneten, drehbaren und parallel zur xy-Ebene sich erstreckenden Armen vorgenommen. Denkbar wäre jedoch auch, einen gelenkigen Greiferarm einzusetzen, welcher die Objekte in der gewünschten Ausrichtung auf dem Transportband ablegt, oder ein in x-Achse verschiebbares Drehkreuz, welches die Objekte wie gewünscht orientiert.

Gegenstand der vorliegenden Erfindung ist auch ein Verfahren zum kontrollierten Ablegen und Anordnen von Objekten, insbesondere von Paketen und dergleichen, auf einer Transportvorrichtung, z.B. einer Palette, welche eine Ablagefläche mit den Dimensionen X₁X₂ in x- Richtung und Y₁Y₂ in y-Richtung definiert
gekennzeichnet durch folgende Verfahrensschritte,
- Ablegen eines Objekts auf einem in y-Richtung orientierten Transportband;
- Positionieren eines in y-Richtung verschiebbaren Anschlags im Endbereich des Transportbands derart, dass das abzulegende Objekt dann, wenn es am Anschlag anliegt, in y-Richtung die Position y₃ einnimmt,
- Transportieren des Objekts in y-Richtung bis zum Anschlag,
- Einstellen eines Bull Nose Band in x-Richtung derart, dass das abzulegende Objekt dann, wenn es auf der Transportvorrichtung abgelegt wird, in x-Richtung die Position x₃ einnimmt,
- Weitertransport des Objekts in x-Richtung, bis das Objekt das Bull Nose Band verlassen hat.

Das erfindungsgemässe Verfahren hat den Vorteil, dass durch dieses eine hohe Taktrate realisierbar ist und dieses daher den mehrachsigen Gelenkarmrobotern überlegen ist. Ausserdem lassen sich die Objekte mit grosser Genauigkeit (< ungefähr 1cm) auf den Paletten anordnen.

Vorteilhaft wird die Höhe der Transportvorrichtung in z-Richtung in Übereinstimmung mit den in der Steuervorrichtung abgelegten Daten eingestellt, bevor das Objekt abgelegt wird. Das heisst, dass die Transportbänder in der Höhe nicht verstellbar sein müssen. Vorzugsweise wird das Bull Nose Band beim Ablegen des Objekts auf der Transportvorrichtung in x-Richtung zurückgefahren. Dabei ist die Geschwindigkeit beim Zurückfahren vorzugsweise kleiner als die Transportgeschwindigkeit des Bull Nose Bands resp. des Ablegebands, sodass sich das Objekt im Wesentlichen ohne Zwischenraum an das vordere anschliesst. Die Transportgeschwindigkeit des Bull Nose Bands resp. des Ablegebands ist vorzugsweise zwischen 1 und 100% und besonders bevorzugt zwischen 5 und 50% grösser als die Rückzugsgeschwindigkeit des Bull Nose Bands, sodass sich für das auf dem Ablegeband befindliche Objekt immer noch eine Nettobewegung nach vorne ergibt.

Gemäss einer vorteilhaften Variante des Verfahrens wird am Bull Nose Band ein Beladeband angeordnet, welches zum Ablegen des Objekts auf der Transportvorrichtung verschwenkt werden kann. Auf diese Weise kann der Übergang zwischen dem Beladeband und der Ablagefläche sehr gering gestaltet werden.

Nachfolgend wir die Erfindung unter Bezugnahme auf die Figuren näher im Detail beschreiben. Es zeigt:
- Fig. 1 bis 4:: eine erfindungsgemässe Vorrichtung zum Ablegen und Anordnen von Objekten beim Beladen einer Palette mit quaderförmigen Objekten auf einer ersten Ebene und
- Fig. 5 und 6:: die Vorrichtung der Fig. 1 bis 4 beim Beladen einer zweiten Ebene.

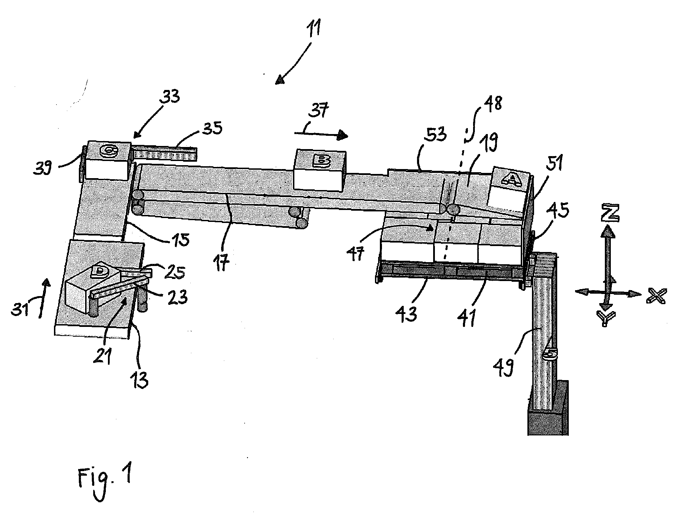

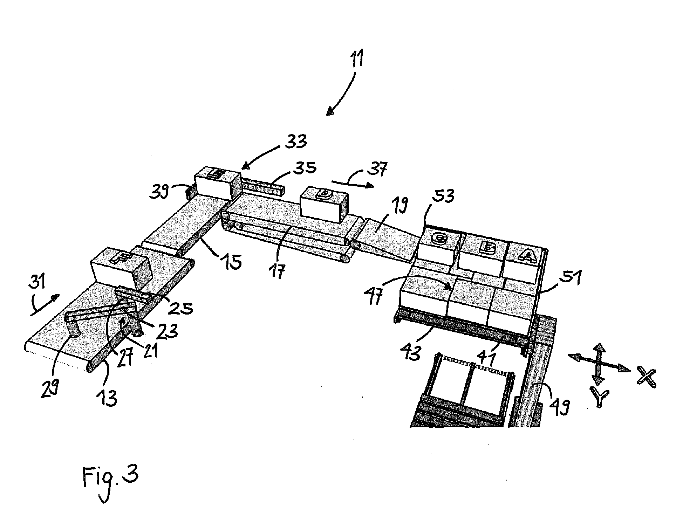

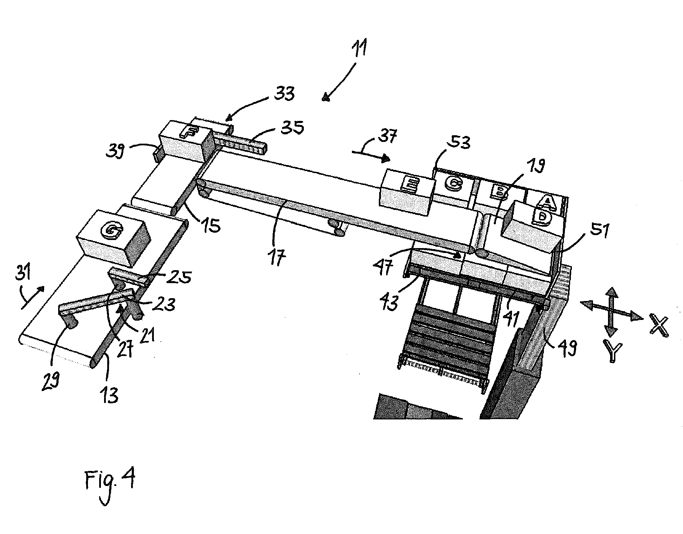

Die in den Figuren 1 bis 5 gezeigte Vorrichtung 11 besitzt eine Mehrzahl von Transportbändern, nämlich ein Übernahmeband 13, ein an das Übernahmeband anschliessendes Transportband 15, ein im Wesentlichen rechtwinklig zum Transportband 15 angeordnetes Bull Nose Band 17, und ein Beladeband 19, welches am Ende des Bull Nose Bands 17 angeordnet ist. Die erwähnten Transportbänder stehen in der genannten Reihenfolge miteinander in Verbindung, sind jedoch vorzugsweise individuell mittels eines in den Figuren nicht gezeigten Antriebs antreibbar. Jedes Transportband besitzt wenigstens zwei in Abstand voneinander angeordnete Rollen für den Antrieb jeweils eines um die Rollen laufenden Transportbandes. Das Bull Nose Band 17 ist insofern etwas Besonderes, als dieses mehr als zwei Rollen besitzt und die Länge des Transportbandes variiert werden kann. Ein Bull Nose Transportband ist dadurch gekennzeichnet, dass eine fixe Länge eines Transportbandes und mindestens vier anstelle von zwei Rollen vorgesehen sind. Durch Veränderung der Lage von wenigstens zwei Rollen kann die Länge des Transportbandes ebenfalls verändert werden. Bull Nose Bänder sind dem Fachmann jedoch bekannt, weshalb auf deren Konstruktion und Funktionsweise nicht näher eingegangen werden braucht.

Das Übernahmeband 13 ist jenes Band, von welchem ein Objekt (ausnahmsweise auch mehrere Objekte) von einem Zulieferband oder einem Roboter übernommen wird. Auf dem Übernahrneband 13 wird ein abgelegtes Objekt nötigenfalls orientiert, d.h. eine Kante eines in der Regel quaderförmigen Objekts wird bezüglich der Transportrichtung ausgerichtet. Zu diesem Zweck kann eine Orientierungsvorrichtung 21 vorgesehen sein, die diese Aufgabe übernimmt. Gemäss dem gezeigten Ausführungsbeispiel besitzt die Orientierungsvorrichtung zwei Schwenkarme 23,25, an denen Rollen 27,29 verschwenkbar angeordnet sind. In den Figuren ist die Orientierungsvorrichtung nicht vollständig gezeigt, sondern nur deren essentiellen Komponenten dargestellt. Die Orientierungsvorrichtung kann auf dem Boden oder an der Decke abgestützt sein. Durch entsprechende Winkelstellung der Arme 23,25 können so Objekte auf dem laufenden Übernahmeband gedreht und ausgerichtet werden, sodass die gewünschte Kante im Wesentlichen parallel zu einer ersten Transportrichtung (Pfeil 31) verläuft.

An das Übernahmeband schliesst das Transportband 15 unmittelbar an. Am Ende des Transportbands 15 ist ein sog. Eckabschieber 33 vorgesehen. Dieser ist um eine bestimmte Distanz in der Transportrichtung 31 des Transportbandes 15 verschiebbar. Der Eckabschieber 33 besitzt einen Anschlag 35, welcher im Wesentlichen parallel zu einer zweiten Transportrichtung 37 steht, die im Wesentlichen senkrecht zur ersten Transportrichtung verläuft. Ein am Eckabschieber 33 vorgesehener Schieber 39 erlaubt, ein am Anschlag 35 anliegendes Objekt auf das Bull Nose Band 17 zu befördern.

Mittels des Bull Nose Band 17 kann ein Objekt weiter in Richtung einer zu beladenden Transportvorrichtung, vorliegend eine Palette 41, weiter transportiert werden. Das Bull Nose Band 17 lässt sich um eine Distanz, welche ungefähr der einer Kantenlänge 43 der Palette 41 entspricht, aus- und wieder zusammenfahren, wobei das Transportband 17 seine Spannung behält.

Eine in den Figuren nicht gezeigte Führungseinrichtung erlaubt es, das Bull Nose Band 17 in der ersten Transportrichtung 31 zu verschieben und zwar um eine Distanz, welche ungefähr der Länge der anderen Kante 45 der Palette 41 entspricht. Durch die Beweglichkeit des Bull Nose Bands 17 in den zwei Transportrichtungen 31,37 kann ein Objekt an praktisch jedem beliebigen Ort auf der Palette 41 abgelegt werden. Die Führungseinrichtung kann unter- oder oberhalb des Bull Nose Bands 17 vorgesehen sein und ein oder mehrere Führungsschienen umfassen. Ist die Führungseinrichtung oberhalb des Bull Nose Bands 17 angeordnet, so hat dies den Vorteil, dass die Zugänglichkeit zu den Transportbändern weniger stark beeinträchtigt ist.

Der Eckabschieber 33 ist vorzugsweise unabhängig vom Bull Nose Band 17 in y-Richtung verschiebbar, könnte jedoch auch mit diesem mechanisch gekoppelt sein. Die unabhängige Verschiebbarkeit des Eckabschiebers hat den Vorteil, dass ein Objekt an in y-Richtung gesehen unterschiedlichen Stellen auf dem Bull Nose Band 17 abgelegt werden kann. Gemäss einer bevorzugten Ausführungsform ist deshalb eine zweite Führungseinrichtung nur für den Eckabschieber 33 vorgesehen (in den Figuren nicht dargestellt), welche unabhängig von der ersten Führungseinrichtung ansteuerbar und betreibbar. Die zweite Führungseinrichtung besitzt ein oder mehrere in der y-Richtung verlaufende Führungselemente, an welchen der Eckabschieber 33 beweglich angeordnet ist. Da solche Führungseinrichtungen auf die unterschiedlichste Art realisiert werden können und der Aufbau und Funktion dem Fachmann geläufig sind, braucht deshalb auf die genaue Konstruktion solcher Führungseinrichtungen nicht näher eingegangen werden.

Um ein Objekt sanft auf der Palette ablegen zu können, ist am vorderen Ende des Bull Nose Bands 17 vorzugsweise ein Beladeband 19 vorgesehen. Dieses Beladeband 19 ist spitz zulaufend, sodass am vorderen Ende (Streckenende) lediglich eine minimale Höhendifferenz zwischen Beladeband 19 und Ablagefläche 47 besteht. Ausserdem ist das Beladeband 19 um eine horizontale Drehachse 48 verschwenkbar. Um die Höhendifferenz möglichst gering zu halten, sind am vorderen Ende Distanzsensoren (in den Figuren nicht gezeigt) vorgesehen, welche den Abstand des vorderen Endes des Beladebands 19 nach vorne und nach unten zu den nächstliegenden Gegenständen/Flächen bestimmen können. Diese Information wird an die Steuervorrichtung weiter geleitet, welche den Vorschub des Bull Nose Bands 17 und des daran angeordneten Beladebands 19 sowie die Höhe des letzteren entsprechend fein einstellt.

Die Palette 41, auf welcher die Objekte abzulegen sind, ist auf einem Lift oder einer Hebevorrichtung 49 angeordnet. Die Hebevorrichtung 49 besitzt an wenigstens der in der zweiten Transportrichtung 37 gesehen entfernteren Seite eine Begrenzungswand 51, an welchem die vorderen Objekte anliegen können. Eine zweite Begrenzungswand 53 kann entlang einer weiteren (hinteren) Seitenkante der Hebevorrichtung 45 vorgesehen sein.

In den Figuren 1 bis 4 ist gezeigt, wie mehrere Objekte A, B, C ...bis G hintereinander transportiert und abgelegt werden. Es ist erkennbar, dass zu jedem Zeitpunkt jeweils ein Objekt auf einem der Bänder abgelegt ist. Das heisst, die erfindungsgemässe Vorrichtung ist in der Lage, mindestens vier Objekte gleichzeitig zu transportieren.

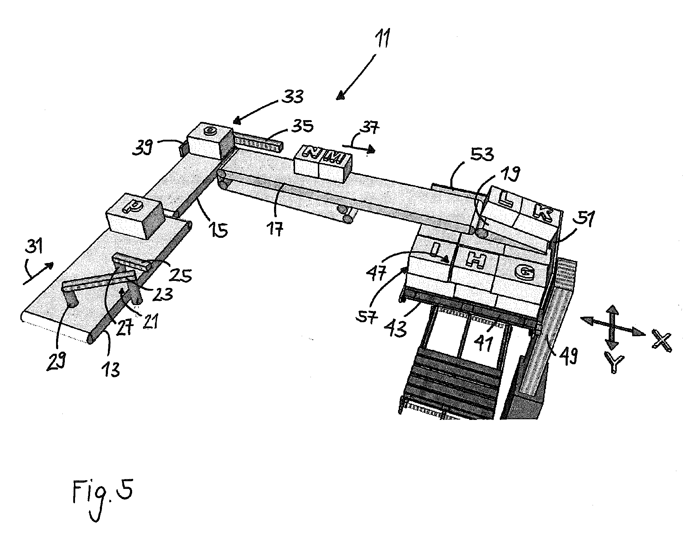

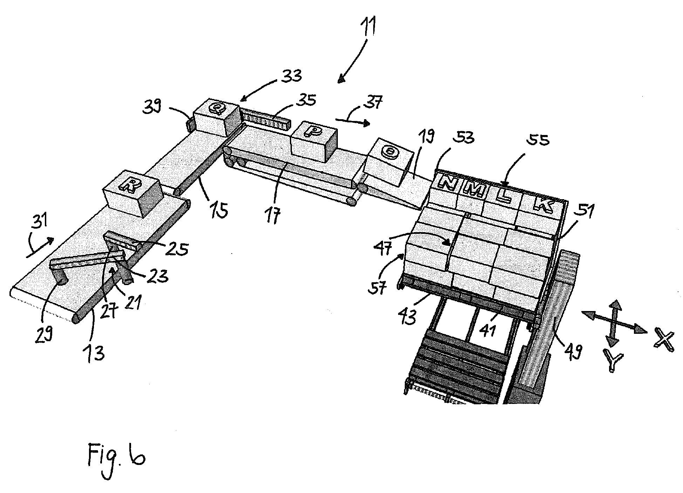

Die Figuren 5 und 6 zeigen schliesslich, wie eine zweite Lage 55 von Objekten auf der ersten Lage 57 abgelegt wird. Um dies zu bewerkstelligen, könnten grundsätzlich die Transportbänder angehoben werden. Einfacher jedoch ist, die Palette 41 mit Hilfe der Hebevorrichtung 45 abzusenken. Dazu muss die durch die Transportbänder definierte Transportebene auf einer solchen Höhe angeordnet sein, dass die auf der Hebevorrichtung angeordnete Palette in der gewünschten Höhe beladen werden kann.

Sind kleinere Objekte zu transportieren und abzulegen, so können auf einem Band gleichzeitig zwei Objekte transportiert werden.

Die erfindungsgemässe Vorrichtung funktioniert wie folgt: Aufgrund von Bestellungen werden Kartons mit Waren aus beispielsweise einem automatisch arbeitenden Hochregallager gefüllt und verschlossen. Die Daten bezüglich Grösse (Länge x Breite x Höhe) des Kartons werden durch ein Programm erfasst. Kartons, die für den gleichen Adressaten bestimmt sind, werden zusammengefasst und vereinzelt in einer vorher bestimmten Reihenfolge (sequenziert) der Palettiervorrichtung zugeführt. Die Palettiervorrichtung hat die Aufgabe, die Kartons auf der Palette abzulegen. Dazu werden der Palettiervorrichtung nicht nur die Daten betreffend die Grösse der einzelnen Kartons übermittelt, sondern auch die Stellen vorgegeben, wo auf der Palette der Karton abgelegt werden soll. Dies geschieht normalerweise durch die Übermittlung von entsprechenden Koordinatenangaben. Dies ist soweit bekannt aus dem Stand der Technik.

Da die Palettierer oftmals eigenständige Systeme sind, besitzen diese in der Regel eine eigene Steuereinheit mit Rechner und Komponenten für die Ein- und Ausgabe von Daten. Diese Steuereinheit besitzt auch eine Schnittstelle für die Entgegennahme der Daten des vorgelagerten Systems, welches für die Bereitstellung der Kartons sorgt. Im Rahmen der vorliegenden Erfindung soll jedoch auch möglich sein, dass die Palettiervorrichtung Teil eines grösseren integrierten Systems ist und von dessen zentraler Steuereinheit gesteuert wird.

Die Daten bezüglich Kartongrösse (Länge, Breite, Höhe), Position des Kartons auf der Palette und gegebenenfalls die aktuelle Orientierung dem Übernahmeband zugeführten Kartons werden der Steuereinheit der Palettiervorrichtung übergeben. Diese Daten können als Koordinaten eines kartesischen Koordinatensystems definiert sein. In den Figuren ist ein solches Koordinatensystem eingezeichnet, wobei die 1. Transportrichtung des Übernahmebands die y-Richtung und die 2. Transportrichtung die x-Richtung ist. Stimmt die aktuelle Orientierung mit der gewünschten Orientierung nicht überein, dreht die Orientierungsvorrichtung 21 den Karton bezüglich der z-Achse auf dem Übernahmeband 13 so weit, bis das Paket in der richtigen oder ungefähr richtigen Orientierung auf dem Band liegt.

Der bezüglich seiner z-Achse ausgerichtete Karton wird sodann weiter transportiert, bis er am Anschlag 35 des Eckabschiebers 33 anliegt. Dabei richtet sich die vordere Seite des Kartons am Anschlag 35, der sich in x-Richtung erstreckt, aus, sodass eine zuvor nur unvollkommene oder ungenaue Orientierung durch die Orientierungsvorrichtung ebenfalls korrigiert wird. Wenn der Karton am Anschlag anliegt, ist seine endgültige Position in y-Richtung bereits festgelegt.

Anschliessend wird der Karton durch den Eckabschieber 33 auf das Bull Nose Band 17 befördert, welches vorgängig in y-Richtung an die richtige Position verschoben wurde. Jene Seitefläche des Kartons, welche zuvor am Anschlag angelegen ist, kann mit dem entfernten Rand des Bull Nose Band 17 fluchten oder im Abstand zu Rand des Bull Nose Bands angeordnet sein. Dabei werden das Bull Nose Band und der Anschlag 35 so positioniert, dass das zu befördernde Objekt an der vorgesehenen Stelle abgelegt wird Wenn eine Kante des Kartons mit dem äusseren Rand des Bull Nose Bands fluchtet, kann ein minimaler Abstand der Kartons zur seitlichen Begrenzungswand 53 (in y-Richtung) sichergestellt werden.

Vom Bull Nose Band 17 wird der Karton dann dem Beladeband 19 übergeben. Das Beladeband 19 wird vorne so weit wie möglich abgesenkt, damit der Karton direkt auf die Unterlage 47 abgesetzt werden kann. Die anfängliche Stellung des Bull Nose Bands 17 wird dabei so eingestellt, dass das vordere Ende des Beladebands 19 sich nur eine kurze Distanz, üblicherweise ungefähr 5 bis 15 cm vor dem nächsten Hindernis (Begrenzungswand, Karton oder anderes Objekt) befindet. In dieser Stellung wird der Karton auf die Unterlage abgesetzt. Weil das Beladeband 19 beim Absetzen weiterläuft, wird der Karton nach vorne geschoben, bis er an der vorderen Begrenzungswand oder einem anderen Karton anliegt. Mit dem Absetzen des Karton wird gleichzeitig oder mit geringerer Verzögerung das Bull Nose Band 17 zurückgefahren, wobei die Rückfahrgeschwindigkeit des Bull Nose Bands 17 vorzugsweise etwas kleiner als die Bandgeschwindigkeit des Beladebands 19 ist. Auf diese Weise ist sichergestellt, dass der abzulegende Karton nach vorne gestossen und direkt an den vor ihm liegenden Karton oder die Begrenzungswand anschliesst.

Auf der Palettierebene ist die Begrenzung der Palette durch je eine Seiten- oder Begrenzungswand 51,53 längs und quer gebildet. Jede Positionierung der Kartons startet für jede Ebene von der durch die beiden Begrenzungswände gebildeten Ecke aus.

Am Beladeband 19 sind an der Front und am linken Rand Sensoren platziert. Diese sorgen dafür, dass nur eine minimale Lücke zwischen den vorhandenen Kartons und dem neu zu platzierenden vorhanden ist. Die Grob-Positionierung erfolgt durch den Rechner, die Fein-Positionierung durch diese Sensoren.

Das Beladeband 19 fördert die Kartons in die genaue X-Y-Position; die Z-Position übernehmen die Hebevorrichtung 49 und der Schwenkmechanismus des Beladebands 19.

Die Zykluszeit wird also nur durch das Abladen des Karton vom Beladeband 19 und dem Wechsel in die nächste Paletten-Position bestimmt. Die Wege zur nächsten Paletten-Position sind sehr kurz, was zu kleinen Wechselzeiten führt.

Das Verschieben des Bandsystems erfolgt durch die aktive Bull Nose und einem verschiebbaren Abschieber. Die Bewegung des Bull Nose Bands wird vorzugsweise mittels Servo-Antrieben ausgeführt. Diese Bewegungen erfolgen parallel zu den Bandantrieben. Beim Anfahren der nächsten Belade-Position werden gleichzeitig die nachfolgenden Kartons auf das vordere Band transportiert.

Die verschiedenen Stationen (Bänder, Orientierungsvorrichtung) übernehmen jeweils nur eine Teilarbeit der Palettierung. Alle Teilarbeiten erfolgen im gleichen Takt. Der Transfer zum nächsten Teilabschnitt erfolgt ebenfalls gleichzeitig, was Zykluszeiten pro Taktschritt von ungefähr 3 Sekunden erlaubt. Zum Zeitpunkt, wo das Objekt auf die Palette abgelegt wird, wird bereits das nachfolgende Objekt auf das Ablageband transportiert.

Wenn das Objekt in X-Richtung platziert werden muss, erfolgt die Ablage der Objekte praktisch ohne zeitlichen Unterbruch. Bei kleinen Objekten können auch 2-4 Objekte zusammen abgesetzt werden.

Aus dem in den Figuren 1 bis 4 dargestellten Ablauf der Transportoperation ist insbesondere ersichtlich, dass sich jeweils mindestens ein Objekt (Karton, Paket, etc.) auf einem der Transportbänder befindet. Während das Beladeband 19 in Fig.1 das Objekt A gerade auf der Palette absetzt, transportiert das Bull Nose Band 17 das nächste Objekt B zum Beladeband 19. Gleichzeitig transportiert das Transportband 15 das Objekt C zum Eckabschieber 33, und orientiert die Orientierungsvorrichtung 21 das Objekt D. Dies entspricht einem ersten Takt.

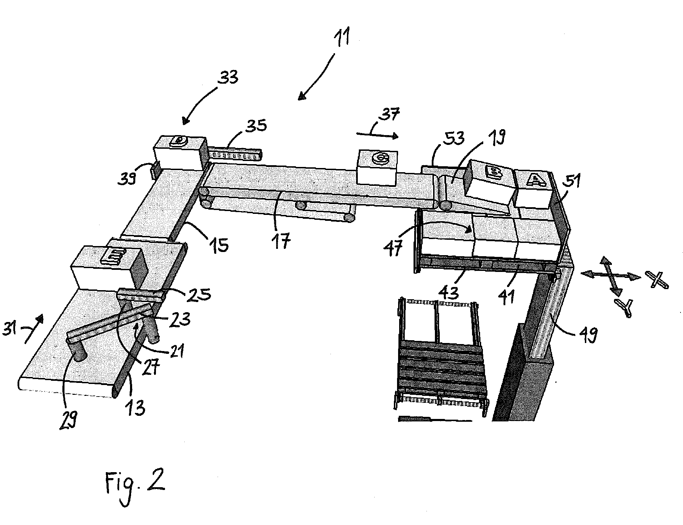

Im nächsten (zweiten) Takt (siehe Fig. 2) wird das Objekt B hinter dem Objekt A abgesetzt, das Objekt C vom Bull Nose Band 17 und das Objekt D vom Transportband 15 weiter transportiert. Gleichzeitig wird das nächste Objekt E durch die Orientierungsvorrichtung 21 ausgerichtet. Dieser Ablauf wiederholt sich, bis die Palette 41 mit den gewünschten Objekten beladen ist. Durch die Verwendung von wenigstens drei, individuell ansteuer- und antreibbaren Transportbändern kann der erfindungsgemässe Palettierer eine hohe Ladekapazität erreichen, welche diejenige eines Gelenkarmroboters bei weitem übertrifft.

Eine Vorrichtung zum kontrollierten Ablegen und Anordnen von Objekten, wie von Paketen, Kartons, etc. auf einer Transportvorrichtung, z.B. einer Palette, besitzt mehrere in Reihe geschalteter Transportbänder 13,15,17,19, welche im Takt betrieben werden, sodass sich jeweils mindestens ein Paket jeweils auf einem Transportband befinden kann. Die abzulegenden Objekte werden zunächst vorzugsweise bezüglich einer z-Achse orientiert und dann an einem Eckabschieber 33 ausgerichtet. Der in der y-Richtung verschiebbare Eckabschieber 33 definiert dabei gleichzeitig die endgültige Position des Objekts in der y-Richtung. Danach wird das Objekt einem in der x-Richtung orientierten Bull Nose Band 17 übergeben, dessen Längserstreckung in x-Richtung veränderbar ist. Vom Bull Nose Band 17 wird das Objekt einem Beladeband 19 übergeben, welches das Objekt hinter einem auf der Palette bereits vorhandenen anderen Objekt oder einer anderen Begrenzung anordnet. Ist eine erste Lage 57 auf der Palette voll, wird die Hebevorrichtung, auf welcher die Palette abgelegt ist, nach unten verfahren, sodass eine nächste zweite Lage 55 von Objekten angeordnet werden kann.

### Legende

- 11: Vorrichtung zum Ablegen und Anordnen von Objekten, insbesondere Palettiervorrichtung
- 13: Übernahmeband
- 15: Transportband
- 17: Bull Nose Band
- 19: Beladeband, Beladevorrichtung
- 21: Orientierungsvorrichtung
- 23,25: Schwenkarme
- 27,29: Rollen
- 31: erste Transportrichtung
- 33: Eckabschieber
- 35: Anschlag
- 37: Transportrichtung
- 39: Schieber
- 41: Palette, Transportvorrichtung
- 43,45: Kanten der Palette
- 47: Ablagefläche auf Palette
- 48: Drehachse des Ablagebands
- 49: Hebevorrichtung
- 51: erste Seiten- oder Begrenzungswand
- 53: zweite Seiten- oder Begrenzungswand
- 55: zweite Lage
- 57: erste Lage

## Patentansprüche

1. Vorrichtung (11) zum kontrollierten Ablegen und Anordnen von Objekten, insbesondere von Paketen, Trays, Mehrweggebinden, Kartons u.ä. auf einer Ablage oder einerTransportvorrichtung (41), z.B. einer Palette, welche eine Ablagefläche (47) mit den Dimensionen X₁X₂ in x- Richtung und Y₁Y₂ in y-Richtung definiert, insbesondere eine Palettiervorrichtung, mit
a einem Transportband (15) für den Transport eines Objekts in der y-Richtung, b einem am Ende des Transportbands (15) vorgesehenen Eckabschieber (33), welcher in der y-Richtung verschiebbar ist und einen parallel zur x-Richtung sich erstreckenden Anschlag (35) sowie ein Förderorgan (39) für die Verschiebung des Objekts in x-Richtung aufweist,
c einem in x-Richtung orientierten Bull Nose Band (17), dessen Längserstreckung in x-Richtung veränderbar ist,
d wenigstens einer Führungsvorrichtung mit in y-Richtung sich erstreckenden Führungselementen, auf oder an welchen das Bull Nose Band (17) und gegebenenfalls der Eckabschieber (33) verschiebbar angeordnet sind,
e einer in z- Richtung verschiebbaren Hebevorrichtung (49) für die Aufnahme einer Transportvorrichtung (41), und
f einer Steuervorrichtung zur Steuerung der einzelnen Bänder, des Eckabschiebers (33), der Führungsvorrichtung und der Hebevorrichtung (49).

2. Vorrichtung nach Anspruch 1, **dadurch gekennzeichnet, dass** am Ende des Bull Nose Bands (17) eine Beladevorrichtung (19) angeordnet ist.

3. Vorrichtung nach Anspruch 1 oder 2, **dadurch gekennzeichnet, dass** die Beladevorrichtung (19) um eine in der y-Richtung verlaufende Drehachse (48) verschwenkbar ist.

4. Vorrichtung nach einem der Ansprüche 1 bis 3, **dadurch gekennzeichnet, dass** an der Beladevorrichtung (19) mit der Steuervorrichtung in Verbindung stehende Sensoren vorgesehen sind, um den Abstand des vorderen Endes der Beladevorrichtung (19) in x-Richtung nach vorne und vorzugsweise in z-Richtung nach unten zu bestimmen.

5. Vorrichtung nach einem der Ansprüche 1 bis 4, **dadurch gekennzeichnet, dass** eine Orientierungsvorrichtung (21) vorgesehen ist zum Ausrichten des Objekts auf dem Transportband (15) bezüglicher einer in z-Richtung verlaufender Drehachse.

6. Vorrichtung nach einem der Ansprüche 1 bis 5, **dadurch gekennzeichnet, dass** die Steuervorrichtung eine Schnittstelle besitzt, um Daten bezüglich des abzulegenden Objekts von einem anderen Rechner entgegenzunehmen.

7. Vorrichtung nach einem der Ansprüche 1 bis 6, **dadurch gekennzeichnet, dass** die Führungsvorrichtung in der x-Richtung um das 0.6 bis 1.4-fache, vorzugsweise 0.8 bis 1.2-fache, und besonders bevorzugt das 0.9 bis 1.0-fache der Distanz Y₁Y₂ verschiebbar ist.

8. Vorrichtung nach einem der Ansprüche 1 bis 7, **dadurch gekennzeichnet, dass** die Orientierungsvorrichtung (21) zwei in Abstand voneinander angeordnete, drehbare und parallel zur xy-Ebene sich erstreckende Arme (23,25) aufweist.

9. Vorrichtung nach einem der Ansprüche 1 bis 8, **dadurch gekennzeichnet, dass** die Beladevorrichtung (19) in der Breite veränderbar ist.

10. Verfahren zum kontrollierten Ablegen und Anordnen von Objekten, insbesondere von Paketen und dergleichen, an einer durch die Koordinaten X₃Y₃ definierten Stelle auf einer Transportvorrichtung (41), z.B. einer Palette, welche eine Ablagefläche (47) mit den Dimensionen X₁X₂ in x- Richtung und Y₁Y₂ in y-Richtung definiert, **gekennzeichnet durch** folgende Verfahrensschritte,
- Ablegen eines Objekts auf einem in y-Richtung orientierten Transportband (15);
- Positionieren eines in y-Richtung verschiebbaren Anschlags (35) am Ende des Transportbands (15) derart, dass das abzulegende Objekt dann, wenn es am Anschlag (35) anliegt, in y-Richtung die Position y₃ einnimmt,
- Transportieren des Objekts in y-Richtung bis zum Anschlag (35),
- Einstellen eines Bull Nose Bands (17) in x-Richtung derart, dass das abzulegende Objekt dann, wenn es auf der Transportvorrichtung (41) abgelegt wird, in x-Richtung die Position x₃ einnimmt,
- Weitertransport des Objekts in x-Richtung, bis das Objekt das Bull Nose Band (17) verlassen hat.

11. Verfahren nach Anspruch 10, **dadurch gekennzeichnet, dass** die Höhe der Transportvorrichtung (41) in z-Richtung in Übereinstimmung mit den in der Steuervorrichtung abgelegten Daten eingestellt wird, bevor das Objekt abgelegt wird.

12. Verfahren nach Anspruch 10 oder 11, **dadurch gekennzeichnet, dass** das Bull Nose Band (17) beim Ablegen des Objekts auf der Transportvorrichtung (41) in x-Richtung zurückgefahren wird, wobei die Geschwindigkeit beim Zurückfahren vorzugsweise kleiner als die Transportgeschwindigkeit des Bull Nose Bands (17) ist.

13. Verfahren nach einem der Ansprüche 10 bis 12, **dadurch gekennzeichnet, dass** am Bull Nose Band (17) ein Beladeband (19) angeordnet ist, welches zum Ablegen des Objekts auf der Transportvorrichtung (41) verschwenkt werden kann.

14. Verfahren nach einem der Ansprüche 10 bis 14, **dadurch gekennzeichnet, dass** das Objekt vor Erreichen des Eckabschiebers (33) bezüglich der z-Achse in Übereinstimmung mit in einer Steuervorrichtung vorhandenen Daten über das Objekt ausgerichtet wird.

15. Verfahren nach einem der Ansprüche 10 bis 14, **dadurch gekennzeichnet, dass** die Transportbänder (13,15,17,19) getaktet werden, sodass nach jedem Takt mindestens jeweils ein Objekt auf jedem einzelnen Transportband liegt.
